# EUROPEAN PATENT APPLICATION

(11) **EP 4 836 226 A1**
(43) Date of publication of application: **04.11.2026**
(21) Application number: 24909737.9
(22) Date of filing: 31.07.2024
(51) Int. Cl.: H02J 3/38, H02J 3/00

(54) **CONVERTER SYSTEM OF WIND TURBINE GENERATOR SYSTEM, AND WIND TURBINE GENERATOR SYSTEM AND OFFSHORE WIND FARM**

(30) Priority: 30.12.2023 CN 202311871198
(71) Applicant: GOLDWIND SCIENCE & TECHNOLOGY CO., LTD., Xinjiang 830026 (CN)
(72) Inventor: YANG, Zhiqian, Beijing 100176 (CN); LV, Liangnian, Beijing 100176 (CN); GUO, Rui, Beijing 100176 (CN); AISIKAER, Aisikaer, Beijing 100176 (CN); JING, Shuang, Beijing 100176 (CN); CHENG, Zhijiang, Beijing 100176 (CN); JIANG, Minghao, Beijing 100176 (CN)
(74) Representative: Hoffmann Eitle
(86) International application number: PCT/CN2024/108782
(87) International publication number: WO 2025/138783

(57) **Abstract**

Provided in the present disclosure are a converter system of a wind turbine generator system, and a wind turbine generator system and an offshore wind farm. The converter system comprises: a voltage source converter and a current source converter; and a converter control apparatus, which is configured to control the operation of the voltage source converter and the current source converter by means of taking into account an internal circulating current of a wind turbine generator system in voltage outer-loop control of the voltage source converter and by means of taking into account the internal circulating current in active and reactive power control stages of the current source converter.

## Description

### FIELD

The present disclosure relates to the technical field of wind power generation, and in particular to a converter system for a wind turbine, a wind turbine, and an offshore wind farm.

### BACKGROUND

A wind turbine is a device for converting wind energy into electrical energy and outputting the electrical energy to a wind farm through a converter system provided therein. Currently, the converter system may include a voltage-source converter (that is, a grid-forming converter) or a current-source converter (a grid-following converter). Since the voltage-source converter has an inertia characteristic similar to a synchronous generator, it can provide stable frequency support for an offshore power grid and therefore has attracted much attention in the industry in recent years. However, the voltage-source converter is still at a theoretical level and has not yet been put into practical application. The current-source converter has a fast power response capability and has been widely used. However, the current-source converter is required to maintain synchronous with a power grid and generally has no frequency support capability.

### SUMMARY

In view of this, a converter system for a wind turbine, a wind turbine and an offshore wind farm are provided in the present disclosure. A voltage-source converter and a current-source converter are combined in the converter system for the wind turbine, thus providing both frequency support and fast power response.

In a general aspect, a converter system for a wind turbine is provided. The converter system includes: a voltage-source converter and a current-source converter, where the voltage-source converter and the current-source converter are connected in parallel between an output end of a generator of the wind turbine and a point of common coupling of the wind turbine, the voltage-source converter includes a first machine-side converter and a first grid-side converter connected in sequence, and the current-source converter includes a second machine-side converter and a second grid-side converter connected in sequence; and a converter control apparatus, configured to: control operation of the voltage-source converter by using an internal circulating current of the wind turbine as a control variable in voltage outer-loop control of the voltage-source converter; and control operation of the current-source converter by using the internal circulating current of the wind turbine as a control variable in active power control and reactive power control of the current-source converter, where the internal circulating current of the wind turbine is determined based on an output current of the first grid-side converter and an output current of the second grid-side converter.

In an embodiment, the converter control apparatus is configured to: determine a d-axis component of a converter output voltage reference value based on an active power reference value and an active power actual value of the first grid-side converter; determine a q-axis component of the converter output voltage reference value based on an output current and a virtual angular frequency of the wind turbine; determine a d-axis component and a q-axis component of a first current reference value by performing the voltage outer-loop control on the d-axis component and the q-axis component of the converter output voltage reference value and based on the internal circulating current of the wind turbine; obtain a d-axis component and a q-axis component of a modulation voltage reference value of the first grid-side converter, by performing the current inner-loop control on the d-axis component and the q-axis component of the first current reference value; and control operation of the first grid-side converter based on a virtual internal voltage phase and the d-axis component and the q-axis component of the modulation voltage reference value of the first grid-side converter, where the output current of the wind turbine is determined based on the output current of the first grid-side converter and the output current of the second grid-side converter.

In an embodiment, the converter control apparatus is configured to: determine a d-axis component and a q-axis component of a second current reference value, based on an active power reference value and an active power actual value of the second grid-side converter, and an output current and the internal circulating current of the wind turbine; obtain a d-axis component and a q-axis component of a modulation voltage reference value of the second grid-side converter, by performing current inner-loop control on the d-axis component and the q-axis component of the second current reference value; and control operation of the second grid-side converter based on a virtual internal voltage phase and the d-axis component and the q-axis component of the modulation voltage reference value of the second grid-side converter, where the output current of the wind turbine is determined based on the output current of the first grid-side converter and the output current of the second grid-side converter.

In an embodiment, the converter control apparatus is further configured to: determine the virtual angular frequency and the virtual internal voltage phase based on a filter-capacitor voltage of the first grid-side converter.

In an embodiment, the converter control apparatus is further configured to: obtain a second proportional-integral operation result by performing a proportional-integral operation on a difference between the active power reference value and the active power actual value of the first grid-side converter; and determine a d-axis component of the converter output voltage reference value based on the second proportional-integral operation result and a preset voltage feedforward compensation value of the wind turbine.

In an embodiment, the converter control apparatus is further configured to: obtain a first proportional operation result by performing a proportional operation on the output current of the wind turbine; and obtain the q-axis component of the converter output voltage reference value by performing a proportional operation on a difference between the first proportional operation result and the virtual angular frequency.

In an embodiment, the converter control apparatus includes a first grid-side controller and a second grid-side controller communicating with each other, where the first grid-side controller is configured to control operation of the first grid-side converter, and the second grid-side controller is configured to control operation of the second grid-side converter.

In an embodiment, the wind turbine is an offshore wind turbine, and the generator is a six-phase permanent magnet synchronous wind turbine generator.

In an embodiment, a capacity of the current-source converter is identical to a capacity of the voltage-source converter.

In an embodiment, the output current of the wind turbine is a sum of the output current of the first grid-side converter and the output current of the second grid-side converter; and the internal circulating current of the wind turbine is a difference between the output current of the first grid-side converter and the output current of the second grid-side converter.

In another general aspect, a wind turbine is provided in the present disclosure. The wind turbine includes the converter system according to any one of the above embodiments.

In another general aspect, an offshore wind farm is provided in the present disclosure. The offshore wind farm includes multiple above-described wind turbines.

In the converter system for a wind turbine, the wind turbine and the offshore wind farm according to the embodiments of the present disclosure, a voltage-source converter and a current-source converter are combined in the wind turbine, to provide frequency support through the voltage-source converter and achieve fast power response through the current-source converter, such that an offshore low-frequency alternating-current transmission system is provided with both frequency support and fast power response capabilities. Furthermore, by applying a circulating current suppression strategy in a control strategy of the converter system, power imbalance caused by a circulating current between the voltage-source converter and the current-source converter is reduced, thereby removing the adverse impact of power imbalance on the power of the offshore low-frequency alternating-current transmission system. In addition, a six-phase permanent magnet synchronous wind turbine generator is used in the wind turbine. By using the six-phase permanent magnet synchronous wind turbine generator, on one hand, advantages such as high rated power, small dimension, and low harmonic content, and economical advantages are provided, and on the other hand, it allows connection to both the voltage-source converter and the current-source converter to provide frequency support and achieve fast power response.

### BRIEF DESCRIPTION OF THE DRAWINGS

The above and other objects and features of the present disclosure will become apparent from the following description in conjunction with the drawings.
FIG. 1 is a block diagram illustrating a converter system for a wind turbine according to an exemplary embodiment of the present disclosure;
FIG. 2A is a schematic diagram illustrating a control strategy for a voltage-source converter according to an exemplary embodiment of the present disclosure, and FIG. 2B is a schematic diagram illustrating a control strategy for a current-source converter according to an exemplary embodiment of the present disclosure;
FIG. 3 is a schematic diagram illustrating an equivalent model for each of output ends of a voltage-source converter and a current-source converter; and
FIG. 4 is a topology diagram illustrating an offshore low-frequency alternating-current transmission system based on a diode rectifier unit (DRU) according to an embodiment of the present disclosure.

### DETAILED DESCRIPTION

Specific embodiments are provided below to help readers to gain a comprehensive understanding of the method, device, and/or system described herein. After understanding the present disclosure, various alternations, modifications, and equivalents of the method, apparatus, and/or system described herein would be clear. For example, an order of operations described herein is only exemplary and the present disclosure is not limited to the order described herein. The order of operations may be changed as would be clear after understanding the present disclosure, except for operations that must occur in a specific order. In addition, description of features known in the art may be omitted, for clarity and conciseness.

The features described herein may be implemented in different forms and should not be limited to the examples described herein. On the contrary, the examples described herein are provided to illustrate only some of feasible ways of implementing the method, apparatus, and/or system described herein, many other feasible ways would be clear after understanding the present disclosure.

As used herein, term ''and/or'' includes any one of listed items associated with the term, and any combination of any two or more of the items.

Although terms "first," "second," "third" and the like may be used herein to describe various members, components, regions, layers, or parts, these members, components, regions, layers, or parts should not be limited by these terms. On the contrary, these terms are only used to distinguish one member, component, region, layer, or part from another member, component, region, layer, or part. Therefore, without departing from the teachings of the examples, a first member, first component, first region, first layer, or first part referred to in the examples described herein may alternatively be referred to as a second member, second component, second region, second layer, or second part.

In the specification, an element (such as a layer, region, or substrate) described as being "on", "connected to", or "bonded to" another element may be directly "on", "connected to", or "bonded to" another element, or there may be one or more other elements between the two elements. On the contrary, when a component is described as "directly on" another component, "directly connected to" or "directly bonded to" another element, there may be no other elements between the two components.

The terms used herein are only for describing various examples and are not intended to limit the present disclosure. Unless clearly indicated in the context otherwise, a singular form is intended to include a plural form. Terms "include", "comprise", and "have" indicate existence of a mentioned feature, quantity, operation, component, element, and/or combination thereof, but do not exclude existence or addition of one or more other features, quantities, operations, members, elements, and/or combinations thereof.

Unless otherwise defined, all terms (including technical terms and scientific terms) used herein have the same meanings as those commonly understood by an ordinary technical person in the art to which the present disclosure belongs upon the understanding of the present disclosure. Unless explicitly defined otherwise, terms (such as terms defined in a general dictionary) should be interpreted as having meanings consistent with their respective contexts in the relevant field and in the present disclosure, and should not be interpreted ideally or excessively formally.

In addition, in the description of the examples, the detailed description of well-known relevant structures or functions is omitted when it is considered that the detailed description may lead to ambiguity in the present disclosure.

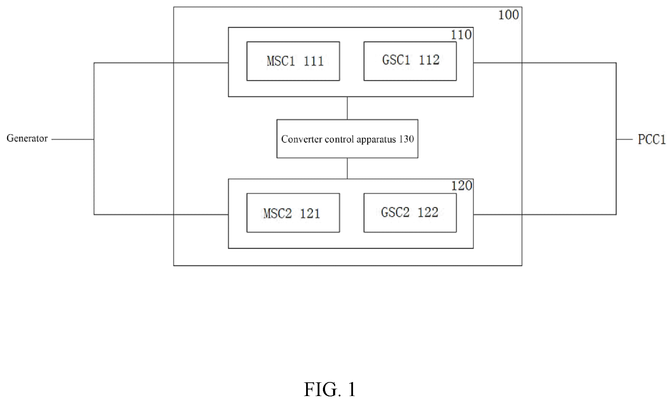

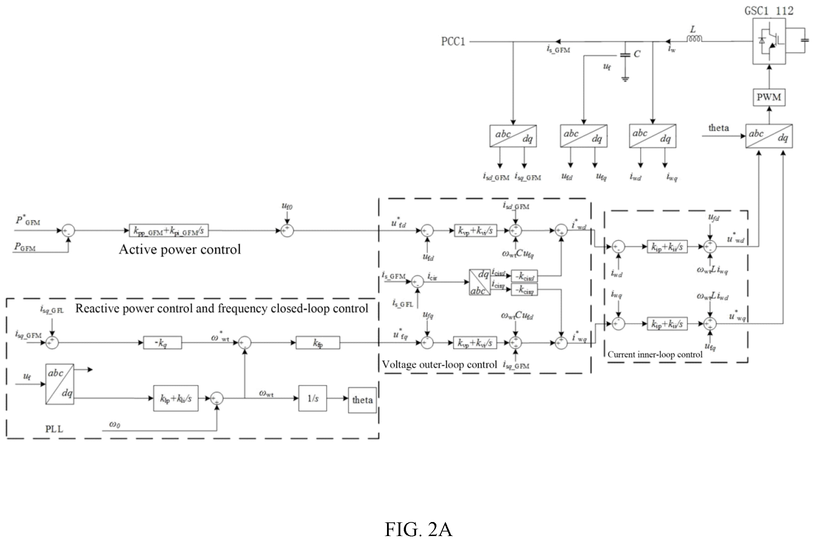

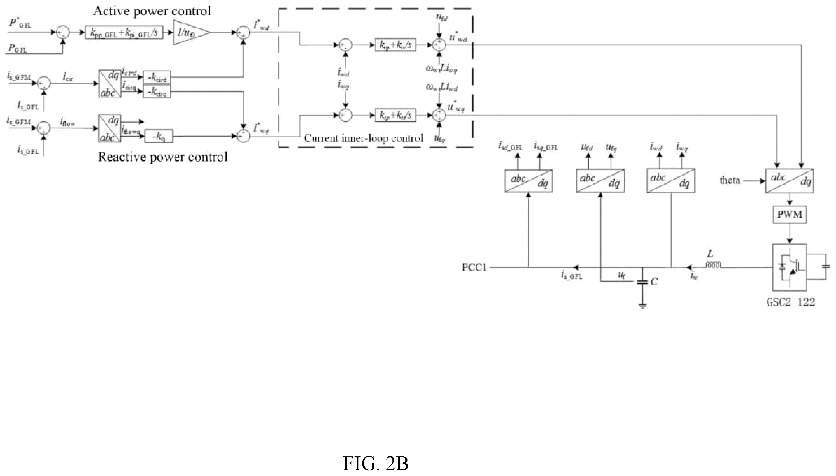

FIG. 1 is a block diagram illustrating a converter system for a wind turbine according to an exemplary embodiment of the present disclosure. FIG. 2A is a schematic diagram illustrating a control strategy for a voltage-source converter according to an exemplary embodiment of the present disclosure, and FIG. 2B is a schematic diagram illustrating a control strategy for a current-source converter according to an exemplary embodiment of the present disclosure. Hereinafter, the converter system for the wind turbine and a control method thereof according to exemplary embodiments of the present disclosure are described in detail with reference to FIG. 1 to FIG. 2B.

Referring to FIG. 1, a converter system 100 for a wind turbine includes a voltage-source converter 110, a current-source converter 120, and a converter control apparatus 130. The voltage-source converter 110 and the current-source converter 120 are connected in parallel between an output end of a generator of the wind turbine and a grid-connection point (that is, a first point of common coupling) PCC1 of the wind turbine. The voltage-source converter 110 includes a first machine-side converter (MSC1) 111 and a first grid-side converter (GSC1) 112 connected in sequence. The current-source converter 120 includes a second machine-side converter (MSC2) 121 and a second grid-side converter (GSC2) 122 connected in sequence. The converter control apparatus 130 is configured to control operation of the voltage-source converter 110 by using an internal circulating current of the wind turbine as a control variable in voltage outer-loop control of the voltage-source converter 110, and to control operation of the current-source converter 120 by using the internal circulating current of the wind turbine as a control variable in active power control and reactive power control of the current-source converter 120. The internal circulating current of the wind turbine may be determined based on an output current of the first grid-side converter GSC1 112 and an output current of the second grid-side converter GSC2 122. According to an embodiment of the present disclosure, the converter control apparatus 130 may control the first machine-side converter MSC1 111 and the second machine-side converter MSC2 121 according to existing control strategies. Therefore, the control of the converter control apparatus 130 on respective operations of the voltage-source converter 110 and the current-source converter 120 described herein refers to that the converter control apparatus 130 controls the operation of the first grid-side converter GSC1 112 and the operation of the second grid-side converter GSC2 122. The first grid-side converter GSC1 112 is a voltage-source GSC, and the second grid-side converter GSC2 122 is a current-source GSC.

According to an embodiment of the present disclosure, the wind turbine is an offshore wind turbine, and a generator of the wind turbine is a six-phase permanent magnet synchronous generator (PMSG) of the wind turbine. The six-phase PMSG has advantages such as high rated power, small dimension, and low harmonic content, and being economic. Further, one three-phase output of the six-phase PMSG may be connected to the voltage-source converter 110, and the other three-phase output may be connected to the current-source converter 120, thereby providing frequency support and achieving fast power response. Furthermore, to suppress the internal circulating current of the wind turbine, a capacity of the voltage-source converter 110 may be identical to that of the current-source converter 120, that is, a ratio between power of the voltage-source converter 110 and that of the current-source converter 120 is 1:1.

According to an embodiment of the present disclosure, the converter control apparatus 130 may determine a d-axis component *u^{*}_{fd}* of a converter output voltage reference value based on an active power reference value *P^{*}_{GFM}* and an active power actual value *P_{GFM}* of the first grid-side converter GSC1 112; determine a q-axis component *u^{*}_{fq}* of the converter output voltage reference value based on an output current *i_{flow}* and a virtual angular frequency *ω_{wt}* of the wind turbine; by performing the voltage outer-loop control on the d-axis component ${{u}_{f}^{∗}}_{d}$ of the converter output voltage reference value and the q-axis component *u^{*}_{fq}* of the converter output voltage reference value and based on the internal circulating current *i_{cir}* of the wind turbine, determine a d-axis component *i**_{*w*d} and a q-axis component *i^{*}_{wq}* of a first current reference value; by performing current inner-loop control on the d-axis component and the q-axis component of the first current reference value, obtain a d-axis component *u^{*}_{wd}* and a q-axis component *u^{*}_{wq}* of a modulation voltage reference value of the first grid-side converter GSC1 112; and control the operation of the first grid-side converter GSC1 112 based on a virtual internal voltage phas*e theta* and the d-axis component *u^{*}_{wd}* and the q-axis component *u^{*}_{wq}* of the modulation voltage reference value of the first grid-side converter GSC1 112. Here, the output current *i_{flow}* of the wind turbine is determined based on the output current of the first grid-side converter GSC1 112 and the output current of the second grid-side converter GSC2 122.

The method for controlling the operation of the first grid-side converter GSC1 112 is briefly described below. The d-axis component *u^{*}_{wd}* and the q-axis component *u^{*}_{wq}* of the modulation voltage reference value may be converted, based on the virtual internal voltage phas*e theta*, into a three-phase voltage in an abc coordinate system or a two-phase voltage in an αβ coordinate system, and then inputted into a pulse width modulation (PWM) module for modulation. A modulated signal obtained after pulse width modulation may be inputted to GSC1 112 to control switching of an insulated gate bipolar transistor (IGBT) device in GSC1 112, thereby regulating an output (for example, an output power, an output current, an output voltage and the like) of GSC1 112. Since above method for controlling the operation of the first grid-side converter GSC1 112 is well known to those skilled in the art, detailed description thereof is omitted herein.

Referring to FIG. 2A, an inductor-capacitor (LC) filter circuit is arranged at an output end of the first grid-side converter GSC1 112. A current (that is, the output current of the first grid-side converter GSC1 112) outputted by the first grid-side converter GSC1 112 to the PCC1 via the LC filter circuit may be converted, through coordinate transformation (for example, Park transformation), from a current in the abc coordinate system into a current in a dq coordinate system, that is, *i_{s_GFM}* is converted into *i_{sd_GFM}* and *i_{sq_GFM}*. A filter capacitor voltage may be converted, through coordinate transformation, from a voltage in the abc coordinate system into a voltage in the dq coordinate system, that is, *u_{f}* is converted into *u_{fd}* and *u_{fq}*. A filter inductor current may be converted, through coordinate transformation, from a current in the abc coordinate system into a current in the dq coordinate system, that is, *i_{w}* is converted into *i_{wd}* and *i_{wq}*.

According to an embodiment of the present disclosure, the converter control apparatus 130 may further determine the virtual angular frequency *ω_{wt}* and the virtual internal voltage phas*e theta* based on the filter-capacitor voltage value *u_{f}* of the first grid-side converter GSC1 112.

In an embodiment, the virtual angular frequency *ω_{wt}* may be determined through a phase-locked loop (PLL). That is, an integral operation is performed on the q-axis component *u_{fq}* of the filter-capacitor voltage value *u_{f}*, and a result of the integral operation is summed up with a grid rated angular frequency *ω₀*, to obtain the virtual angular frequency *ω_{wt}*. The *ω_{wt}* is calculated using the following equation (1): ${ω}_{wt} = {k}_{lp} {u}_{fq} + {k}_{li} \int {u}_{fq} dt + {ω}_{0}$ (1) where, *kₗₚ* represents a proportional coefficient, and *kₗᵢ* represents an integral coefficient.

Then, the virtual internal voltage phas*e theta* may be obtained by performing an integral operation on the virtual angular frequency *ω_{wt}*.

According to an embodiment of the present disclosure, the converter control apparatus 130 may perform a proportional-integral operation on a difference between the active power reference value *P^{*}_{GFM}* and the active power actual value *P_{GFM}* of the first grid-side converter GSC1 112 to obtain a second proportional-integral operation result; and determine a d-axis component *u^{*}_{fd}* of the converter output voltage reference value based on the second proportional-integral operation result and a preset voltage feedforward compensation value *u_{f0}* of the wind turbine. As shown in FIG. 2A, the converter control apparatus 130 determines the d-axis component *u^{*}_{fd}* of the converter output voltage reference value through active power control. *u^{*}_{fd}* is calculated using the following equation (2): $u {*}_{fd} = \left(P{*}_{GFM}-{P}_{GFM}\right) \left({k}_{pp _ GFM}+\frac{{k}_{pi _ GFM}}{s}\right) + {u}_{f 0}$ (2) where, *k_{pp_GFM}* represents a proportional coefficient, and *k_{pi_GFM}* represents an integral coefficient.

According to an embodiment of the present disclosure, the converter control apparatus 130 may perform a proportional operation (in FIG. 2A, a proportional coefficient of which is shown as *-k_{q}*) on the output current *i_{flow}* of the wind turbine to obtain a first proportion operation result *ω*^{*}*_{wt}*, and then performs a proportional operation (in FIG. 2A, a proportional coefficient of which is shown as *k_{fq}*) on a difference between the first proportion operation result *ω*^{*}*_{wt}* and the virtual angular frequency *ω_{wt}* to obtain the q-axis component *u^{*}_{fq}* of the converter output voltage reference value. As shown in FIG. 2A, the converter control apparatus 130 determines, through reactive power control and frequency closed-loop control, the virtual angular frequency *ω_{wt}*, the virtual internal voltage phase *theta,* and the q-axis component *u^{*}_{fq}* of the converter output voltage reference value.

Here, it should be noted that in the conventional control strategy for grid-connection of the wind turbine, a grid voltage amplitude is regulated based on a d-axis reference voltage *u^{*}_{fd}* (that is, the above-described d-axis component of the converter output voltage reference value), and a q-axis reference voltage *u^{*}_{fq}* (that is, the above-described q-axis component of the converter output voltage reference value) is generally set to zero. Setting *u^{*}_{fq}* to zero is intended to assume that the phase-locked loop rotates completely according to a reference angular frequency and a reference phase, requiring a grid-connected voltage to be strongly synchronized with a grid voltage. However, in the control strategy for the voltage-source converter (or a voltage-source wind turbine), there is no strongly-grid-following angular frequency, and an angular frequency of an offshore wind farm is completely generated by the offshore wind farm itself. Therefore, setting *u^{*}_{fq}* to zero is no longer appropriate. Since *ω_{wt}* and *theta* measured by the phase-locked loop reflect the output *u_{fq}* of the offshore low-frequency alternating-current transmission system, which indicates that the q-axis reference voltage *u^{*}_{fq}* may be used for controlling an alternating-current frequency, the converter control apparatus 130 may determine the q-axis reference voltage *u^{*}_{fq}* through the processing described above. In addition, *ω^{*}_{wt}* is controlled by controlling a proportional coefficient for performing the proportional operation on the output current *i_{flow}* of the wind turbine, thereby maintaining a frequency of the wind turbine at 20 Hz stably, to achieve a grid-forming function of the wind turbine.

According to an embodiment of the present disclosure, the converter control apparatus 130 may perform voltage outer-loop control on the d-axis component *u^{*}_{fd}* and the q-axis component *u^{*}_{fq}* of the converter output voltage reference value to obtain a d-axis component and a q-axis component of an output current reference value for the voltage outer loop. The voltage outer-loop control is a control method well known to those skilled in the art, which is not detailed herein. In addition, the converter control apparatus 130 may determine a d-axis component and a q-axis component of the internal circulating current *i_{cir}* of the wind turbine. After obtaining the d-axis component and the q-axis component of the output current reference value for the voltage outer loop and determining the d-axis component and the q-axis component of the internal circulating current *i_{cir}* of the wind turbine, the converter control apparatus 130 may determine the d-axis component *i**_{*w*d} of the first current reference value based on the d-axis component of the output current reference value for the voltage outer loop and the d-axis component of the internal circulating current, and determines the q-axis component *i*_{wq}* of the first current reference value based on the q-axis component of the output current reference value for the voltage outer loop and the q-axis component of the internal circulating current. As shown in FIG. 2A, the converter control apparatus 130 may determine a sum of the d-axis component of the output current reference value for the voltage outer loop and the d-axis component of the internal circulating current as *i*_{wd},* and determine a sum of the q-axis component of the output current reference value for the voltage outer loop and the q-axis component of the internal circulating current as *i*_{wq}.* As such, the voltage outer-loop control as shown in FIG. 2A incorporates circulating current control.

In an embodiment, the converter control apparatus 130 may transform, through coordinate transformation, the internal circulating current *i_{cir}* of the wind turbine into a first d-axis component *i_{cird}* and a first q-axis component *i_{cirq}* in the dq coordinate system; perform an integral operation on the first d-axis component (in FIG. 2A, an integral coefficient of which is shown as *-k_{cird}*) to obtain the d-axis component of the internal circulating current; and perform an integral operation on the first q-axis component (in FIG. 2A, an integral coefficient of which is shown as *-k_{cirq}*) to obtain the q-axis component of the internal circulating current.

Since the control strategies for the voltage-source converter 110 and the current-source converter 120 are asynchronously performed or hardware parameters of the voltage-source converter 110 and those of the current-source converter 120 are inconsistent, an internal circulating current inevitably occurs in the wind turbine, leading to power imbalance in the wind turbine. Therefore, the internal circulating current is used as a feedforward control variable for the circulating current control incorporated in the voltage outer-loop control as shown in FIG. 2A, to remove phase fluctuations caused by asynchronization between the voltage-source converter 110 and the current-source converter 120.

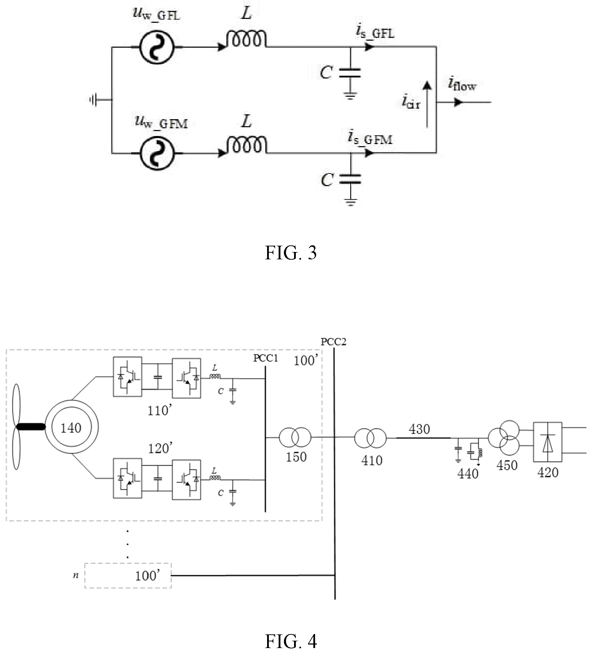

FIG. 3 is a schematic diagram illustrating an equivalent model for each of respective output ends of a voltage-source converter and a current-source converter. Referring to FIG. 3, *u_{w_GFM}* represents the voltage-source converter, *u_{w_GFL}* represents the current-source converter, and an output current and an internal circulating current of the wind turbine may be determined using the following equation (3): $\left\{\begin{matrix}{i}_{flow} = {i}_{s_GFM} + {i}_{s_GFL} \\ {i}_{cir} = {i}_{s_GFM} - {i}_{s_GFL}\end{matrix}\right.$ (3)

That is, the output current *i_{flow}* of the wind turbine is a sum of the output current *i_{s_GFM}* of the first grid-side converter GSC1 112 and the output current *i_{s_GFL}* of the second grid-side converter GSC2 122, and the internal circulating current *i_{cir}* of the wind turbine is a difference between the output current *i_{s_GFM}* of the first grid-side converter GSC1 112 and the output current *i_{s_GFL}* of the second grid-side converter GSC2 122.

As such, the voltage outer-loop control incorporating the circulating current control may be expressed by the following equation (4): $\left\{\begin{matrix}{i}_{w d}^{∗} = \left({u}_{f d}^{∗}-{u}_{f d}\right) \left({k}_{vp}+\frac{{k}_{vi}}{s}\right) + {i}_{s d _ GFM} - {k}_{cir d} {i}_{cir d} - {ω}_{0} {Cu}_{f q} \\ {i}_{w q}^{∗} = \left({u}_{f q}^{∗}-{u}_{f q}\right) \left({k}_{vp}+\frac{{k}_{vi}}{s}\right) + {i}_{sq _ GFM} - {k}_{cir q} {i}_{cir q} + {ω}_{0} {Cu}_{f d}\end{matrix}\right.$ (4), where *kᵥₚ* is a proportional coefficient, *kᵥᵢ* is an integral coefficient, and C is a capacitance of a filter capacitor.

According to an embodiment of the present disclosure, the converter control apparatus 130 may determine a d-axis component *i^{*}*_{*w*d} and a q-axis component *i^{*}_{wq}* of a second current reference value based on an active power reference value *P^{*}_{GFL}* and an active power actual value *P_{GFL}* of the second grid-side converter GSC2 122, and the output current *i_{flow}* and the internal circulating current *i_{cir}* of the wind turbine; perform current inner-loop control on the d-axis component *i^{*}_{wd}* and the q-axis component *i^{*}_{wq}* of the second current reference value to obtain a d-axis component *u^{*}_{wd}* and a q-axis component *u^{*}_{wq}* of a modulation voltage reference value of the second grid-side converter GSC2 122; and control the operation of the second grid-side converter GSC2 122 based on the virtual internal voltage phase *theta* and the d-axis component *u^{*}_{wd}* and the q-axis component *u^{*}_{wq}* of the modulation voltage reference value of the second grid-side converter GSC2 122. As described above, the output current *i_{flow}* of the wind turbine is determined based on the output current of the first grid-side converter GSC1 112 and the output current of the second grid-side converter GSC2 122. Here, the virtual internal voltage phase *theta* is that as described above, that is, the converter control apparatus 130 may determine the virtual internal voltage phase *theta* based on the filter-capacitor voltage value *u_{f}* of the first grid-side converter GSC1 112. The method for controlling the operation of the second grid-side converter GSC2 122 is similar to that for controlling the operation of the first grid-side converter GSC1 112 described above, which is not detailed herein.

Referring to FIG. 2B, similar to FIG. 2A, an LC filter circuit is arranged at an output end of the second grid-side converter GSC2 122. A current (that is, the output current of the second grid-side converter GSC2 122) outputted by the second grid-side converter GSC2 122 to PCC1 via the LC filter circuit may be transformed, through coordinate transformation (for example, Park transformation), from a current in the abc coordinate system into a current in the dq coordinate system, that is, *i_{s_GFL}* is transformed into *i_{sd_GFL}* and *i_{sq_GFL}.* The filter-capacitor voltage value may be transformed from a voltage in the abc coordinate system to a voltage in the dq coordinate system, that is, *u_{f}* is transformed, through coordinate transformation, into *u_{fd}* and *u_{fq}*. A filter inductor current is transformed, through coordinate transformation, from a current in the abc coordinate system into a current in the dq coordinate system, that is, *i_{w}* is transformed into *i_{wd}* and *i_{wq}*.

According to an embodiment of the present disclosure, the converter control apparatus 130 may perform a proportional-integral operation on a difference between the active power reference value *P^{*}_{GFL}* and the active power actual value *P_{GFL}* of the second grid-side converter GSC2 122 to obtain a third proportional-integral operation result; determine a d-axis reference current *i^{*}_{wd1}* based on the third proportional-integral operation result and a preset voltage feedforward compensation value *u_{f0}* of the wind turbine; transform, through coordinate transformation, the output current *i_{flow}* of the wind turbine into a d-axis output current component and a q-axis component *i^{*}_{wq1}* of the output current in the dq coordinate system; perform a proportional operation (in FIG. 2B, a proportional coefficient of which is shown as *-kq*) on the q-axis component of the output current *i_{flow}* of the wind turbine to obtain a q-axis reference current; determine a d-axis component and a q-axis component of the internal circulating current *i_{cir}* of the wind turbine; and determine the d-axis component *i**_{*w*d} of the second current reference value based on the d-axis reference current *i^{*}_{wd1}* and the d-axis component of the internal circulating current, and determine the q-axis component *i^{*}_{wq}* of the second current reference value based on the q-axis reference current *i^{*}_{wq1}* and the q-axis component of the internal circulating current. As shown in FIG. 2B, the d-axis component *i^{*}_{wd}* of the second current reference value is determined through active power control incorporating the circulating current control, and the q-axis component *i^{*}_{wq}* of the second current reference value is determined through reactive power control incorporating the circulating current control. Furthermore, the converter control apparatus 130 determines a sum of the d-axis reference current *i^{*}_{wd1}* and the d-axis component of the internal circulating current as the d-axis component *i^{*}*_{*w*d} of the second current reference value, and determines a sum of the q-axis reference current *i^{*}_{wq1}* and the q-axis component of the internal circulating current as the q-axis component *i^{*}_{wq}* of the second current reference value.

The d-axis reference current *i^{*}_{wd1}* may be calculated using the following equation (5), and the d-axis component *i^{*}*_{*w*d} of the second current reference value may be determined using the following equation (6): ${i}_{wd 1}^{∗} = \left[\left({P}_{GFL}^{∗}-{P}_{GFL}\right)\left({k}_{pp _ GFL}+\frac{{k}_{pi _ GFL}}{s}\right)\right] / {u}_{f 0}$ (5) $\left\{\begin{matrix}{i}_{wd}^{∗} = \left[\left({P}_{GFL}^{∗}-{P}_{GFL}\right)\left({k}_{pp _ GFL}+\frac{{k}_{pi _ GFL}}{s}\right)\right] / {u}_{f 0} - {k}_{cird} {i}_{cird} \\ {i}_{wq}^{∗} = - {k}_{q _ GFL} \left({i}_{sq _ GFM}+{i}_{sq _ GFL}\right) - {k}_{cirq} {i}_{cirq}\end{matrix}\right.$ (6) where, *k_{pp_GFL}*, *k_{cird}*, and *k_{cirq}* represent respective proportional coefficients, and *k_{pi_GFL}* represents an integral coefficient.

As described above, the converter control apparatus 130 may transform, through coordinate transformation, the internal circulating current *i_{cir}* of the wind turbine into the first d-axis component *i_{cird}* and the first q-axis component *i_{cirq}* in the dq coordinate system; perform an integral operation (in FIG. 2B, an integral coefficient of which is shown as *-k_{cird}*) on the first d-axis component to obtain the d-axis component of the internal circulating current; and perform an integral operation (in FIG. 2B, an integral coefficient of which is shown as *-k_{cirq}*) on the first q-axis component to obtain the q-axis component of the internal circulating current.

According to an embodiment of the present disclosure, the converter control apparatus 130 may include a first grid-side controller (not shown) and a second grid-side controller (not shown) communicating with each other. The first grid-side controller may control the operation of the first grid-side converter, and the second grid-side controller may control the operation of the second grid-side converter. That is, the operations described above with reference to FIG. 2A may be performed by the first grid-side controller, and the operations described above with reference to FIG. 2B may be performed by the second grid-side controller.

In the converter system for a wind turbine according to the embodiments of the present disclosure, a voltage-source converter and a current-source converter are combined in the wind turbine, frequency support is provided through the voltage-source converter and fast power response is achieved through the current-source converter, such that an offshore low-frequency alternating-current transmission system is provided with both frequency support and fast power response capabilities. Furthermore, by applying a circulating current suppression strategy in a control strategy for the converter system, power imbalance caused by a circulating current between the voltage-source converter and the current-source converter is reduced, thereby removing the adverse impact of power imbalance on the power of the offshore low-frequency alternating-current transmission system.

Hereinafter, an offshore low-frequency alternating-current transmission system based on a diode rectifier unit (DRU) and a wind turbine according to an embodiment of the present disclosure are described with reference to FIG. 4.

FIG. 4 is a topology diagram illustrating an offshore low-frequency alternating-current transmission system based on a DRU according to an embodiment of the present disclosure.

Referring to FIG. 4, an offshore low-frequency alternating-current transmission system 400 may include n wind turbines 100' connected in parallel with each other, a booster transformer 410, and a DRU 420, where n is an integer greater than 2. The n wind turbines 100' connected in parallel with each other may form an offshore wind farm.

Each of the n wind turbines 100' may include the above-described converter system, and may further include a generator (that is, a six-phase PMSG) 140 and a wind turbine transformer 150. The converter system includes a voltage-source converter 110' and a current-source converter 120'. Respective output ends of the voltage-source converter 110' and the current-source converter 120' may be provided with an LC filter circuit, and may be connected to a primary side of the wind turbine transformer 150 (for example, but is not limited to a 690V/35KV transformer) via a first point of common coupling (that is, PCC1). A secondary side of the wind turbine transformer 150 is connected to a primary side of the booster transformer 410 (for example, but is not limited to a 35KV/220KV transformer) via a second point of common coupling (that is, PCC2), and a secondary side of the booster transformer 410 is connected to the DRU 420 via a low-frequency alternating-current submarine cable 430. The low-frequency alternating-current submarine cable 430 may transmit low-frequency alternating current outputted from the wind farm to the DRU 420. Direct current outputted by the DRU 420 may be transmitted to an onshore converter station via a submarine cable, converted into alternating current, and then connected to a power grid via an onshore substation. The structure and connection manner of the DRU are well known to those skilled in the art, which are not detailed herein.

In an embodiment, the offshore low-frequency alternating-current transmission system 400 may further include a filter and reactive power compensation system 440 and a converter transformer 450. A primary side of the converter transformer 450 (for example, but is not limited to a 220kV/194kV/194kV converter transformer) is connected to a secondary side of the booster transformer 410 via the low-frequency alternating-current submarine cable 430, and a secondary side of the converter transformer 450 is connected to the DRU 420. In addition, a primary side of the converter transformer 450 is further connected to the filter and reactive power compensation system 440.

Here, it should be noted that, since an onshore modular multilevel converter (MMC) controls a direct-current voltage outputted by the DRU 420 at a rated value, which may be equivalent to a direct-current voltage source, transmitted active power is largely determined based on the direct-current voltage generated by the DRU 420. A direct-current voltage *U_{dc_DRU}* generated by the DRU 420 is calculated using the following equation (7): ${U}_{dc_DRU} = 2 \left(1.35{U}_{r}-\frac{3}{π}{XI}_{dc_DRU}\right)$ (7) where, X is a reactance of the DRU 420, *I_{dc_DRU}* is a direct current outputted by the DRU 420, and *Uᵣ* is a voltage of an offshore alternating-current grid (that is, an alternating-current voltage across the low-frequency alternating-current submarine cable 430). Therefore, an active power transmitted by the wind farm may be determined based on the voltage *Uᵣ* of the offshore alternating-current grid and the filter-capacitor voltage value *u_{f}* of the voltage-source converter. In view of this, active power control for the voltage-source grid-side converter may be constructed as shown in FIG. 2A, enabling its output to be the d-axis converter reference output voltage component, that is, an amplitude of the offshore alternating-current voltage.

As described above, since a wind turbine in the offshore wind farm is provided with both the voltage-source converter and the current-source converter, frequency support can be provided through the voltage-source converter and fast power response can be achieved through the current-source converter, such that an offshore low-frequency alternating-current transmission system 400 is provided with both frequency support and fast power response capabilities.

The control strategy for the voltage-source converter and the control strategy for the current-source converter described above may be compiled as a computer program and stored on a computer-readable storage medium. The computer program, when being executed by a processor, may implement the control strategy of the voltage-source converter and the control strategy of the current-source converter described above. The computer-readable storage medium may include, for example: a read-only memory (ROM), a random access programmable read-only memory (PROM), an electrically erasable programmable read-only memory (EEPROM), a random access memory (RAM), a dynamic random access memory (DRAM), a static random access memory (SRAM), a flash memory, a non-volatile memory, a CD-ROM, a CD-R, a CD+R, a CD-RW, a CD+RW, a DVD-ROM, a DVD-R, a DVD+R, a DVD-RW, a DVD+RW, a DVD-RAM, a BD-ROM, a BD-R, a BD-R LTH, a BD-RE, a Blu-ray or an optical disk memory, a hard disk drive (HDD), a solid state drive (SSD), a card memory (such as, a multimedia card, a secure digital (SD) card or an extreme digital (XD) card), a magnetic tape, a floppy disk, a magneto-optical data storage device, an optical data storage device, a hard disk, a solid state disk and any other devices. The any other devices are configured to store a computer program and any associated data, data files and data structures in a non-transitory manner and provide the computer program and any associated data, data files and data structures to a processor or a computer so that the processor or computer can execute the computer program. In an example, the computer program and any associated data, data files and data structures are distributed over a networked computer system such that the computer program and the associated data, data files and data structures are stored, accessed and executed in a distributed manner by one or more processors or computers.

Although some embodiments of the present disclosure are shown and described, those skilled in the art understand that modifications can be made to the embodiments without departing from the principle and spirit of the present disclosure whose scope is defined by the claims and equivalents thereof.

## Claims

1. A converter system for a wind turbine, comprising:
a voltage-source converter and a current-source converter, wherein the voltage-source converter and the current-source converter are connected in parallel between an output end of a generator of the wind turbine and a point of common coupling of the wind turbine, the voltage-source converter comprises a first machine-side converter and a first grid-side converter connected in sequence, and the current-source converter comprises a second machine-side converter and a second grid-side converter connected in sequence; and
a converter control apparatus, configured to: control operation of the voltage-source converter by using an internal circulating current of the wind turbine as a control variable in voltage outer-loop control of the voltage-source converter; and control operation of the current-source converter by using the internal circulating current of the wind turbine as a control variable in active power control and reactive power control of the current-source converter, wherein the internal circulating current of the wind turbine is determined based on an output current of the first grid-side converter and an output current of the second grid-side converter.

2. The converter system according to claim 1, wherein the converter control apparatus is configured to:
determine a d-axis component of a converter output voltage reference value based on an active power reference value and an active power actual value of the first grid-side converter;
determine a q-axis component of the converter output voltage reference value based on an output current and a virtual angular frequency of the wind turbine;
determine a d-axis component and a q-axis component of a first current reference value, by performing the voltage outer-loop control on the d-axis component and the q-axis component of the converter output voltage reference value and based on the internal circulating current of the wind turbine;
obtain a d-axis component and a q-axis component of a modulation voltage reference value of the first grid-side converter, by performing the current inner-loop control on the d-axis component and the q-axis component of the first current reference value; and
control operation of the first grid-side converter based on a virtual internal voltage phase and the d-axis component and the q-axis component of the modulation voltage reference value of the first grid-side converter,
wherein the output current of the wind turbine is determined based on the output current of the first grid-side converter and the output current of the second grid-side converter.

3. The converter system according to claim 1, wherein the converter control apparatus is configured to:
determine a d-axis component and a q-axis component of a second current reference value, based on an active power reference value and an active power actual value of the second grid-side converter, and an output current and the internal circulating current of the wind turbine;
obtain a d-axis component and a q-axis component of a modulation voltage reference value of the second grid-side converter, by performing current inner-loop control on the d-axis component and the q-axis component of the second current reference value; and
control operation of the second grid-side converter based on a virtual internal voltage phase and the d-axis component and the q-axis component of the modulation voltage reference value of the second grid-side converter,
wherein the output current of the wind turbine is determined based on the output current of the first grid-side converter and the output current of the second grid-side converter.

4. The converter system according to claim 2 or 3, wherein the converter control apparatus is further configured to:
determine the virtual angular frequency and the virtual internal voltage phase based on a filter-capacitor voltage of the first grid-side converter.

5. The converter system according to claim 2, wherein the converter control apparatus is further configured to:
obtain a second proportional-integral operation result by performing a proportional-integral operation on a difference between the active power reference value and the active power actual value of the first grid-side converter; and
determine a d-axis component of the converter output voltage reference value based on the second proportional-integral operation result and a preset voltage feedforward compensation value of the wind turbine.

6. The converter system according to claim 2, wherein the converter control apparatus is further configured to:
obtain a first proportional operation result by performing a proportional operation on the output current of the wind turbine; and
obtain the q-axis component of the converter output voltage reference value by performing a proportional operation on a difference between the first proportional operation result and the virtual angular frequency.

7. The converter system according to claim 2 or 3, wherein the converter control apparatus comprises a first grid-side controller and a second grid-side controller communicating with each other, wherein the first grid-side controller is configured to control operation of the first grid-side converter, and the second grid-side controller is configured to control operation of the second grid-side converter.

8. The converter system according to claim 1, wherein the wind turbine is an offshore wind turbine, and the generator is a six-phase permanent magnet synchronous wind turbine generator.

9. The converter system according to claim 1, wherein a capacity of the current-source converter is identical to a capacity of the voltage-source converter.

10. The converter system according to claim 2 or 3, wherein the output current of the wind turbine is a sum of the output current of the first grid-side converter and the output current of the second grid-side converter; and the internal circulating current of the wind turbine is a difference between the output current of the first grid-side converter and the output current of the second grid-side converter.

11. A wind turbine, comprising the converter system according to any one of claims 1 to 10.

12. An offshore wind farm, comprising a plurality of wind turbines according to claim 11.
